# EUROPÄISCHE PATENTANMELDUNG

(11) **EP 3 663 017 A1**
(43) Veröffentlichungstag der Anmeldung: **10.06.2020**
(21) Anmeldenummer: 18209969.7
(22) Anmeldetag: 04.12.2018
(51) Int. Cl.: B22D 11/08, B22D 11/16, B21B 38/04, G01B 11/00, G01N 21/84

(54) **ÜBERWACHEN EINES VERSCHLEISSZUSTANDS EINER STRANGFÜHRUNGSROLLE EINER STRANGGIESSANLAGE**

(71) Anmelder: Primetals Technologies Austria GmbH, 4031 Linz (AT)
(72) Erfinder: Hlobil, Helmut, 4491 Niederneukirchen (AT); Lang, Oliver, 4407 Dietach (AT); Ott, Daniel, 4040 Linz (AT); Stummer, Christoph, 4040 Linz (AT); Wurm, August, 4061 Pasching (AT)
(74) Vertreter: Metals@Linz

(57) **Zusammenfassung**

Die Erfindung betrifft ein Überwachungsgerät (36) zum Überwachen eines Verschleißzustands einer Strangführungsrolle (22) einer Stranggießanlage (2). Um eine aufwandsgünstige Überwachung des Verschleißzustands der Strangführungsrolle (22) zu ermöglichen, wird vorgeschlagen, dass das Überwachungsgerät (36) eine Ermittlungseinheit (56) zum Ermitteln eines oder mehrerer verschleißabhängiger Zustandsparameter der Strangführungsrolle (22) sowie ein Anschlusselement (62), mittels welchem das Überwachungsgerät (36) drehgelenkig mit einer Kaltstranggliederkette (38) verbindbar ist, aufweist. Außerdem betrifft die Erfindung ein Überwachungssystem (32) mit einem solchen Überwachungsgerät (36), eine Verwendung eines solchen Überwachungsgeräts (36) sowie ein Verfahren zum Überwachen eines Verschleißzustands einer Strangführungsrolle (22) einer Stranggießanlage (2).

## Beschreibung

Die Erfindung betrifft ein Überwachungsgerät zum Überwachen eines Verschleißzustands einer Strangführungsrolle einer Stranggießanlage, ein Überwachungssystem mit einem solchen Überwachungsgerät sowie eine Verwendung eines solchen Überwachungsgeräts. Ferner betrifft die Erfindung ein Verfahren zum Überwachen eines Verschleißzustands einer Strangführungsrolle einer Stranggießanlage.

Eine Strangführung einer Stranggießanlage dient unter anderem der mechanischen Führung eines noch nicht durcherstarrten Metallstranges und umfasst eine Vielzahl von Strangführungsrollen. Zu den Strangführungsrollen gehören beispielsweise sogenannte Treiberrollen, die mithilfe von Antriebsvorrichtungen angetrieben werden und für den Vortrieb des Metallstranges sorgen. Nicht angetriebene Strangführungsrollen einer Strangführung werden Stützrollen genannt.

Da die Strangführungsrollen immer wieder mit der heißen Strangoberfläche eines Metallstranges in Kontakt kommen, unterliegen die Strangführungsrollen einem Verschleiß, bei dem es insbesondere zu einer Abnahme des Rollendurchmessers der jeweiligen Strangführungsrolle kommt. Wird von einer Strangführungsrolle ein bestimmter Verschleißzustand erreicht, beispielsweise bei Unterschreiten eines vorgegebenen Rollendurchmessers der Strangführungsrolle, so muss diese Strangführungsrolle ausgetauscht werden, um einen korrekten Betrieb der Stranggießanlage bzw. ihrer Strangführung sicherstellen zu können. Haben beispielsweise die Treiberrollen der Strangführung unterschiedliche Durchmesser, funktioniert das drehzahlgesteuerte Abziehen des Metallstranges nicht ordnungsgemäß.

Eine Aufgabe der Erfindung ist es, bei einer Stranggießanlage eine aufwandsgünstige Überwachung eines Verschleißzustands einer Strangführungsrolle zu ermöglichen.

Diese Aufgabe wird erfindungsgemäß gelöst durch ein Überwachungsgerät nach Anspruch 1, durch ein Überwachungssystem nach Anspruch 9 sowie durch ein Verfahren nach Anspruch 10.

Bevorzugte Ausgestaltungen der Erfindung sind Gegenstand der abhängigen Patentansprüche sowie der nachfolgenden Beschreibung.

Die Erfindung geht von der Überlegung aus, dass bisher (mangels geeigneter Überwachungsvorrichtungen) die Überwachung eines Verschleißzustands einer Strangführungsrolle nur nach ihrem Ausbau aus der Strangführung möglich war. Das Ausbauen einer Strangführungsrolle aus der Strangführung zum Zwecke der Überwachung des Verschleißzustands der Strangführungsrolle geht jedoch mit einem hohen Zeit- und Arbeitsaufwand einher.

Das erfindungsgemäße Überwachungsgerät zum Überwachen eines Verschleißzustands einer Strangführungsrolle einer Stranggießanlage weist eine Ermittlungseinheit zum Ermitteln eines oder mehrerer verschleißabhängiger Zustandsparameter der Strangführungsrolle auf. Darüber hinaus weist das erfindungsgemäße Überwachungsgerät ein Anschlusselement auf, mittels welchem das Überwachungsgerät drehgelenkig mit einer Kaltstranggliederkette verbindbar ist.

Das Anschlusselement des Überwachungsgeräts kann dazu genutzt werden, das Überwachungsgerät drehgelenkig mit einer Kaltstranggliederkette zu verbinden. Mittels der Kaltstranggliederkette kann das Überwachungsgerät in einen Rollenspalt eines Strangführungssegments der Stranggießanlage eingebracht werden und dort in eine gewünschte (Mess-)Position gebracht werden. Eine drehgelenkige Verbindung zwischen dem Überwachungsgerät und der Kaltstranggliederkette ermöglicht dabei, dass ein Winkel zwischen dem Überwachungsgerät und der Kaltstranggliederkette in Abhängigkeit vom Krümmungsradius des Strangführungssegments einstellbar ist.

Wenn sich das Überwachungsgerät im Rollenspalt eines Strangführungssegments der Stranggießanlage befindet, können mithilfe der Ermittlungseinheit des Überwachungsgeräts ein oder mehrere verschleißabhängige Zustandsparameter der zu überwachenden Strangführungsrolle ermittelt werden. Anhand des oder der ermittelten Zustandsparameter kann in aufwandsgünstiger Weise auf den Verschleißzustand der Strangführungsrolle geschlossen werden. Auf ein Ausbauen der Strangführungsrolle aus der Strangführung zum Zwecke der Überwachung ihres Verschleißzustands kann dabei verzichtet werden.

Unter einem verschleißabhängigen Zustandsparameter der Strangführungsrolle ist vorliegend ein Zustandsparameter der Strangführungsrolle zu verstehen, welcher vom Verschleißzustand der Strangführungsrolle abhängig ist.

Als Rollenspalt eines Strangführungssegments ist vorliegend ein Spalt zwischen den Strangführungsrollen des Strangführungssegments, welche an einer Innenbogenseite des Strangführungssegments angeordnet sind, und den Strangführungsrollen des Strangführungssegments, welche an einer Außenbogenseite des Strangführungssegments angeordnet sind, zu verstehen.

Besagte Stranggießanlage kann insbesondere ein Bestandteil einer Gießwalzverbundanlage sein. Alternativ kann es sich bei der Stranggießanlage um eine separate Anlage (d. h. um eine Anlage, welche nicht Bestandteil einer Gießwalzverbundanlage ist,) handeln.

Die zu überwachende Strangführungsrolle ist vorzugsweise ein Element eines Strangführungssegments der Stranggießanlage. Insbesondere kann die Strangführungsrolle eine Treiberrolle sein. Alternativ kann die Strangführungsrolle eine Stützrolle sein.

Vorteilhafterweise umfasst das Anschlusselement des Überwachungsgeräts eine Öffnung zum Hindurchführen eines Verbindungselements, wie zum Beispiel eines Bolzens. Durch Hindurchführen eines Verbindungselements durch besagte Öffnung kann in aufwandsgünstiger Weise eine sichere Verbindung zwischen dem Überwachungsgerät und einer Kaltstranggliederkette hergestellt werden.

Bei einer bevorzugten Ausgestaltung der Erfindung weist die Ermittlungseinheit eine Durchmesser-Ermittlungsvorrichtung zur Ermittlung eines Rollendurchmessers der Strangführungsrolle auf. Dadurch ist es möglich, den Rollendurchmesser der Strangführungsrolle als verschleißabhängigen Zustandsparameter zu ermitteln.

Zweckmäßigerweise umfasst die Durchmesser-Ermittlungsvorrichtung eine Messvorrichtung. Diese kann einen Projektor zum Projizieren eines Lichtmusters auf eine Umfangsfläche der Strangführungsrolle aufweisen. Bei dem Lichtmuster kann es sich beispielsweise um eine Lichtlinie handeln. Statt einer einzelnen Lichtlinie kann das Lichtmuster zum Beispiel mehrere Lichtlinien, insbesondere mehrere sich kreuzende Lichtlinien, umfassen. Ferner kann die Messvorrichtung einen Detektor zum Erfassen von an der Umfangsfläche der Strangführungsrolle reflektiertem Licht aufweisen. Der Detektor kann insbesondere dazu genutzt werden, die Projektion des Lichtmusters auf der Umfangsfläche der Strangführungsrolle aufzunehmen.

In bevorzugter Weise ist der Projektor der Messvorrichtung der Durchmesser-Ermittlungsvorrichtung ein Laserprojektor, insbesondere ein Linienlaserprojektor. Ein Laserprojektor ist besonders gut geeignet, um ein intensives, feinstrukturiertes Lichtmuster auf die Umfangsfläche der Strangführungsrolle zu projizieren. Alternativ kann der Projektor eine andere Art von Projektor sein, beispielsweise ein Projektor mit einer inkohärenten Lichtquelle. Der Detektor der Messvorrichtung kann beispielsweise eine Flächenbildkamera sein.

Unter einem Linienlaserprojektor ist vorliegend ein Laserprojektor zu verstehen, welcher dazu eingerichtet ist, eine Laserlinie auf eine Fläche zu projizieren. Ein solcher Laserprojektor ist vorzugsweise mit einer (refraktiven) Optik zum Auffächern eines Laserstrahls ausgestattet.

Vorzugsweise umfasst die Durchmesser-Ermittlungsvorrichtung eine weitere solche Messvorrichtung. Die beiden Messvorrichtungen können insbesondere baugleich zueinander ausgeführt sein. Durch den Einsatz von zwei Messvorrichtungen kann (verglichen mit dem Fall, dass die Durchmesser-Ermittlungsvorrichtung nur eine Messvorrichtung aufweist,) eine höhere Anzahl von unterschiedlichen Messwerten gewonnen werden, sodass der Rollendurchmesser der Strangführungsrolle mit einer höheren Genauigkeit ermittelt werden kann. Zudem kann durch den Einsatz von zwei Messvorrichtungen eine Redundanz bei der Durchmesser-Ermittlungsvorrichtung erreicht werden, sodass im Falle eines Ausfalls einer der beiden Messvorrichtungen der Durchmesser-Ermittlungsvorrichtung der Rollendurchmesser immer noch mithilfe der anderen der beiden Messvorrichtungen ermittelt werden kann.

Des Weiteren kann das Überwachungsgerät eine Kontaktfläche zur Berührung durch die Strangführungsrolle aufweisen. Vorteilhafterweise sind die beiden Messvorrichtungen so angeordnet, dass, wenn die Umfangsfläche der Strangführungsrolle mit der Kontaktfläche in Kontakt ist, die erstgenannte Messvorrichtung einer ersten Seite der Umfangsfläche der Strangführungsrolle zugewandt ist und die weitere Messvorrichtung einer zweiten Seite der Umfangsfläche der Strangführungsrolle zugewandt ist, welche von der ersten Seite verschieden ist. Auf diese Weise können von der Durchmesser-Ermittlungsvorrichtung Messwerte gewonnen werden, die zu unterschiedlichen Seiten der Umfangsfläche der Strangführungsrolle gehören.

Die Strangführungsrolle kann (muss aber nicht notwendigerweise) während eines Messvorgangs mit besagter Kontaktfläche des Überwachungsgeräts in Kontakt sein.

Alternativ oder zusätzlich zu ihrem Projektor kann die jeweilige Messvorrichtung der Durchmesser-Ermittlungsvorrichtung einen Scanner, insbesondere eine Laserscanner, aufweisen, welcher dazu eingerichtet ist, zur Ermittlung des Rollendurchmessers der Strangführungsrolle zumindest einen Teil der Umfangsfläche der Strangführungsrolle mit einem Lichtstrahl zeilen- oder rasterartig zu überstreichen. Der Detektor der jeweiligen Messvorrichtung kann in diesem Fall insbesondere dazu genutzt werden, eine Reflexion des Lichtstrahls zu erfassen.

Des Weiteren kann alternativ oder zusätzlich vorgesehen sein, dass die Durchmesser-Ermittlungsvorrichtung mindestens drei federgelagerte Elemente (wie zum Beispiel drei Rollen mit jeweils einem kleineren Durchmesser als die Strangführungsrolle) aufweist, die jeweils durch eine Federkraft gegen die Strangführungsrolle gedrückt werden können. Wird die Position des jeweiligen Elements gemessen, kann aus den gemessenen Positionen der Rollendurchmesser der Strangführungsrolle bestimmt werden.

Ferner ist es vorteilhaft, wenn die Ermittlungseinheit des Überwachungsgeräts eine weitere Durchmesser-Ermittlungsvorrichtung aufweist. Eine der beiden Durchmesser-Ermittlungsvorrichtungen kann zum Beispiel dazu genutzt werden, einen Rollendurchmesser einer Strangführungsrolle, die an einer Innenbogenseite eines Strangführungssegments der Stranggießanlage angeordnet ist, zu ermitteln. Die andere der beiden Durchmesser-Ermittlungsvorrichtungen hingegen kann beispielsweise dazu genutzt werden, einen Rollendurchmesser einer Strangführungsrolle an einer Außenbogenseite desselben Strangführungssegments zu ermitteln. Die beiden Durchmesser-Ermittlungsvorrichtungen können insbesondere baugleich zueinander ausgeführt sein. Vorzugsweise sind die beiden Durchmesser-Ermittlungsvorrichtungen an unterschiedlichen Seiten des Überwachungsgeräts angeordnet.

Weiter kann die Ermittlungseinheit des Überwachungsgeräts eine Profil-Ermittlungsvorrichtung zur Ermittlung eines Oberflächenprofils der Strangführungsrolle aufweisen. Dadurch ist es möglich, das Oberflächenprofil der Strangführungsrolle als verschleißabhängigen Zustandsparameter zu ermitteln.

Zweckmäßigerweise ist die Profil-Ermittlungsvorrichtung mit einer Messvorrichtung ausgestattet. Diese kann insbesondere die gleichen Elemente wie eine der beiden zuvor erwähnten Messvorrichtungen der Durchmesser-Ermittlungsvorrichtung aufweisen. Mit anderen Worten, die obigen Ausführungen zu den Elementen der erstgenannten bzw. weiteren Messvorrichtung der Durchmesser-Ermittlungsvorrichtung können sich in analoger Weise auf die Messvorrichtung der Profil-Ermittlungsvorrichtung beziehen.

Besonders bevorzugt ist es, wenn die Ermittlungseinheit des Überwachungsgeräts eine weitere Profil-Ermittlungsvorrichtung aufweist. Eine der beiden Profil-Ermittlungsvorrichtungen kann zum Beispiel dazu genutzt werden, ein Oberflächenprofil einer Strangführungsrolle, die an einer Innenbogenseite eines Strangführungssegments der Stranggießanlage angeordnet ist, zu ermitteln. Die andere der beiden Profil-Ermittlungsvorrichtungen hingegen kann beispielsweise dazu genutzt werden, ein Oberflächenprofil einer Strangführungsrolle an einer Außenbogenseite desselben Strangführungssegments zu ermitteln. Die beiden Profil-Ermittlungsvorrichtungen können insbesondere baugleich zueinander ausgeführt sein.

Bei einer bevorzugten Ausführungsform der Erfindung ist das Überwachungsgerät mit einer Kamera zum Aufnehmen von Überwachungsbildern ausgestattet. Vorzugsweise ist die Kamera eine Videokamera. In diesem Fall handelt es sich bei den Überwachungsbildern vorzugsweise um Videobilder. Die Überwachungsbilder können Aufschluss über den Zustand der Strangführungsrolle und/oder den Zustand anderer Elemente der Strangführung, wie zum Beispiel von Kühlvorrichtungen, Auflaufblechen usw., geben. Insbesondere lässt sich anhand der Überwachungsbilder der Verschmutzungszustand von Elementen der Strangführung feststellen.

Ferner kann das Überwachungsgerät eine Antenne, insbesondere eine WLAN-Antenne, zur drahtlosen Datenübertragung an eine externe Vorrichtung aufweisen. Alternativ oder zusätzlich kann das Überwachungsgerät einen Port, insbesondere einen USB-Port, für ein externes Speichermedium, wie zum Beispiel einen USB-Stick, aufweisen. Mithilfe der Antenne bzw. des Ports können von der Ermittlungseinheit des Überwachungsgeräts erzeugte (Mess-)Daten zum Zwecke ihrer Auswertung und/oder Verarbeitung an eine externe Vorrichtung übermittelt werden.

Des Weiteren kann das Überwachungsgerät ein Bedienfeld mit einem oder mehreren Bedienelementen aufweisen. Das Bedienfeld kann insbesondere zum Einstellen unterschiedlicher Betriebsmodi des Überwachungsgeräts dienen. Zudem können am Bedienfeld eine oder mehrere Status-Anzeigevorrichtungen, beispielsweise in Form von Lampen, angeordnet sein.

Das Überwachungsgerät kann eingliedrig ausgebildet sein. Alternativ kann das Überwachungsgerät mehrere Glieder umfassen. In letztgenanntem Fall sind die Glieder des Überwachungsgeräts vorteilhafterweise drehgelenkig miteinander verbunden.

Das erfindungsgemäße Überwachungssystem umfasst ein erfindungsgemäßes Überwachungsgerät sowie eine drehgelenkig mit dem Überwachungsgerät verbundene Kaltstranggliederkette.

Zweckmäßigerweise ist das Überwachungsgerät an seinem Anschlusselement mit der Kaltstranggliederkette verbunden. In bevorzugter Weise ist das Überwachungsgerät anstelle eines Kaltstrangkopfes mit der Kaltstranggliederkette verbunden.

Mit anderen Worten, das Überwachungsgerät ersetzt vorzugsweise bei einem Kaltstrang den Kaltstrangkopf.

Vorteilhafterweise sind das Überwachungsgerät und die Kaltstranggliederkette mittels eines Verbindungselements, wie zum Beispiel eines Bolzens, miteinander verbunden. Das Verbindungselement (bzw. dessen Symmetrieachse) bildet vorzugsweise eine Drehachse, um welche das Überwachungsgerät relativ zur Kaltstranggliederkette schwenk-/drehbar ist.

Darüber hinaus kann das Überwachungssystem eine Auswerteeinheit zum Auswerten von mithilfe der Ermittlungseinheit des Überwachungsgeräts gewonnenen Messdaten umfassen. Vorzugsweise ist die Auswerteeinheit dazu eingerichtet, anhand der Messdaten einen oder mehrere verschleißabhängige Zustandsparameter der Strangführungsrolle, wie zum Beispiel deren Rollendurchmesser und/oder ein Oberflächenprofil der Strangführungsrolle, zu ermitteln.

Bei dem erfindungsgemäßen Verfahren zum Überwachen eines Verschleißzustands einer Strangführungsrolle einer Stranggießanlage wird ein Überwachungsgerät in einen Rollenspalt eines Strangführungssegments der Stranggießanlage eingebracht. Außerdem werden mithilfe einer Ermittlungseinheit des Überwachungsgeräts ein oder mehrere verschleißabhängige Zustandsparameter der Strangführungsrolle ermittelt.

Bei dem Überwachungsgerät, welches bei dem erfindungsgemäßen Verfahren verwendet wird, kann es sich insbesondere um das zuvor beschriebene, erfindungsgemäße Überwachungsgerät handeln.

Vorteilhafterweise ist das Überwachungsgerät bei dem Verfahren drehgelenkig mit einer Kaltstranggliederkette verbunden. Weiter ist es vorteilhaft, wenn das Überwachungsgerät mithilfe der Kaltstranggliederkette in den Rollenspalt des Strangführungssegments eingebracht wird.

Vorzugsweise wird als verschleißabhängiger Zustandsparameter der Strangführungsrolle deren Rollendurchmesser ermittelt.

Anstelle des Rollendurchmessers oder zusätzlich zu dem Rollendurchmesser kann als (weiterer) verschleißabhängiger Zustandsparameter der Strangführungsrolle ein Oberflächenprofil der Strangführungsrolle, insbesondere ein Oberflächenprofil der Strangführungsrolle parallel zu deren Rollenachse, ermittelt werden.

Bei einer bevorzugten Ausführungsvariante der Erfindung wird der jeweilige verschleißabhängige Zustandsparameter mittels eines Lichtschnittverfahrens, bei dem ein Lichtmuster auf eine Umfangsfläche der Strangführungsrolle projiziert wird, ermittelt.

Bei einem Lichtschnittverfahren handelt es sich um ein auf Triangulation basierendes Verfahren zur (Abstands-)Vermessung von Punkten auf einer Fläche, auf die ein Lichtmuster projiziert wird.

Vorzugsweise ist die Strangführungsrolle mit dem Überwachungsgerät in Kontakt, während das Lichtmuster zur Ermittlung des jeweiligen Zustandsparameters auf die Umfangsfläche der Strangführungsrolle projiziert wird. Alternativ kann die Strangführungsrolle vom Überwachungsgerät beabstandet sein, während das Lichtmuster zur Ermittlung des jeweiligen Zustandsparameters auf die Umfangsfläche der Strangführungsrolle projiziert wird.

Bei besagtem Lichtmuster, das auf die Umfangsfläche der Strangführungsrolle projiziert wird, kann es sich zum Beispiel um eine Lichtlinie handeln. Im Falle der Ermittlung des Rollendurchmessers der Strangführungsrolle verläuft die Lichtlinie vorzugsweise in Umfangsrichtung der Strangführungsrolle. Im Falle der Ermittlung des Oberflächenprofils der Strangführungsrolle verläuft die Lichtlinie vorzugsweise parallel zur Rollenachse der Strangführungsrolle.

Alternativ oder zusätzlich kann vorgesehen sein, dass der jeweilige verschleißabhängige Zustandsparameter mittels eines Laserscanning-Verfahrens, bei welchem ein Laserstrahl zeilen- oder rasterartig über die Strangführungsrolle geführt wird, ermittelt wird.

Vorteilhafterweise wird das Überwachungsgerät mithilfe von Treiberrollen der Stranggießanlage, welche die Kaltstranggliederkette antreiben, in eine Messposition gebracht, von welcher aus mithilfe des Überwachungsgeräts der oder die Zustandsparameter der Strangführungsrolle ermittelt werden. Bei diesen Treiberrollen kann es sich insbesondere um Treiberrollen des besagten Strangführungssegments, in dessen Rollenspalt das Überwachungsgerät eingebracht wird, handeln.

In bevorzugter Weise wird vom Überwachungsgerät ein Datensatz erzeugt, welcher bei der Überwachung des Verschleißzustands der Strangführungsrolle gewonnene Messwerte umfasst. Weiter ist es zweckmäßig, wenn dieser Datensatz an eine Auswerteeinheit übermittelt wird, von welcher die Messwerte des Datensatzes ausgewertet werden. Die Auswerteeinheit kann insbesondere ein Bestandteil einer Anlagensteuerung, wie zum Beispiel einer speicherprogrammierbaren Steuerung (SPS), sein.

Vorteilhafterweise umfasst der Datensatz eine Kennung des überwachten Strangführungssegments der Stranggießanlage. Dies ist insbesondere dann vorteilhaft, wenn mithilfe des Überwachungsgeräts Strangführungsrollen mehrerer unterschiedlicher Strangführungssegmente der Stranggießanlage überwacht werden sollen. Die Kennung ermöglicht eine eindeutige Zuordnung des Datensatzes bzw. seiner Messwerte zu dem jeweiligen überwachten Strangführungssegments der Stranggießanlage. Vorzugsweise ist die Kennung des jeweiligen überwachten Strangführungssegments aus der bekannten Geometrie bzw. bekannten konstruktiven Ausgestaltung der Strangführung der Stranggießanlage ermittelbar.

Bei dem Verfahren kann insbesondere sowohl ein Verschleißzustand einer Strangführungsrolle, die an einer Innenbogenseite des besagten Strangführungssegments angeordnet ist, als auch ein Verschleißzustand einer Strangführungsrolle, die an einer Außenbogenseite des Strangführungssegments angeordnet ist, überwacht werden. Vorzugsweise werden dabei mithilfe der Ermittlungseinheit des Überwachungsgeräts, insbesondere von derselben Position des Überwachungsgeräts aus, mindestens ein verschleißabhängiger Zustandsparameter der innenbogenseitigen Strangführungsrolle sowie mindestens ein verschleißabhängiger Zustandsparameter der außenbogenseitigen Strangführungsrolle ermittelt.

Insbesondere kann vorgesehen sein, dass die Verschleißzustände aller Strangführungsrollen des besagten Strangführungssegments überwacht werden. Hierbei kann nacheinander an jedem Rollenpaar der Strangführungssegments (jeweils bestehend aus einer innenbogenseitigen Strangführungsrolle und einer außenbogenseitigen Strangführungsrolle) mithilfe des Überwachungsgeräts jeweils von beiden Strangführungsrollen mindestens ein verschleißabhängiger Zustandsparameter ermittelt werden.

Ferner betrifft die Erfindung, wie eingangs erwähnt, unter anderem eine Verwendung des erfindungsgemäßen Überwachungsgeräts.

Bei der erfindungsgemäßen Verwendung wird das Überwachungsgerät zur Kalibrierung eines Rollenspalts eines Strangführungssegments einer Stranggießanlage verwendet.

Zur Kalibrierung des Rollenspalts wird vorteilhafterweise ein Rollenpaar, bestehend aus einer Strangführungsrolle, die an einer Innenbogenseite des Strangführungssegments angeordnet ist, und einer dieser Strangführungsrolle gegenüberliegenden Strangführungsrolle, die an einer Außenbogenseite des Strangführungssegments angeordnet ist, mit einer vorgegebenen Kraft gegen das Überwachungsgerät gedrückt. Das Überwachungsgerät dient dabei vorzugsweise als Abstandhalter zwischen den beiden Strangführungsrollen. So kann in aufwandsgünstiger Weise der Abstand zwischen den beiden Strangführungsrollen kalibriert werden.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Überwachungsgerät, dem erfindungsgemäßen Überwachungssystem, dem erfindungsgemäßen Verfahren und der erfindungsgemäßen Verwendung kombinierbar. Ferner können Verfahrensmerkmale auch als Eigenschaft der entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung eines Ausführungsbeispiels der Erfindung, das im Zusammenhang mit den Figuren näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

Es zeigen:
- FIG 1: eine Stranggießanlage mit einer Strangführung, die mehrere Strangführungssegmente mit jeweils mehreren Strangführungsrollen umfasst;
- FIG 2: eins der Strangführungssegmente aus FIG 1 sowie ein Überwachungssystem, welches ein Überwachungsgerät sowie eine drehgelenkig mit dem Überwachungsgerät verbundene Kaltstranggliederkette umfasst;
- FIG 3: eine Seitenansicht des Überwachungsgeräts aus FIG 2;
- FIG 4: eine Draufsicht des Überwachungsgeräts aus FIG 2 und FIG 3;
- FIG 5: eine Seitenansicht eines Glieds des Überwachungsgeräts, wobei das Glied teilweise im Schnitt abgebildet ist;
- FIG 6: ein Koordinatensystem sowie eine schematische Seitenansicht einer Strangführungsrolle und eines Teils des Überwachungsgeräts;
- FIG 7: ein Koordinatensystem sowie eine schematische Frontalansicht der Strangführungsrolle aus FIG 6 und eines Teils des Überwachungsgeräts.

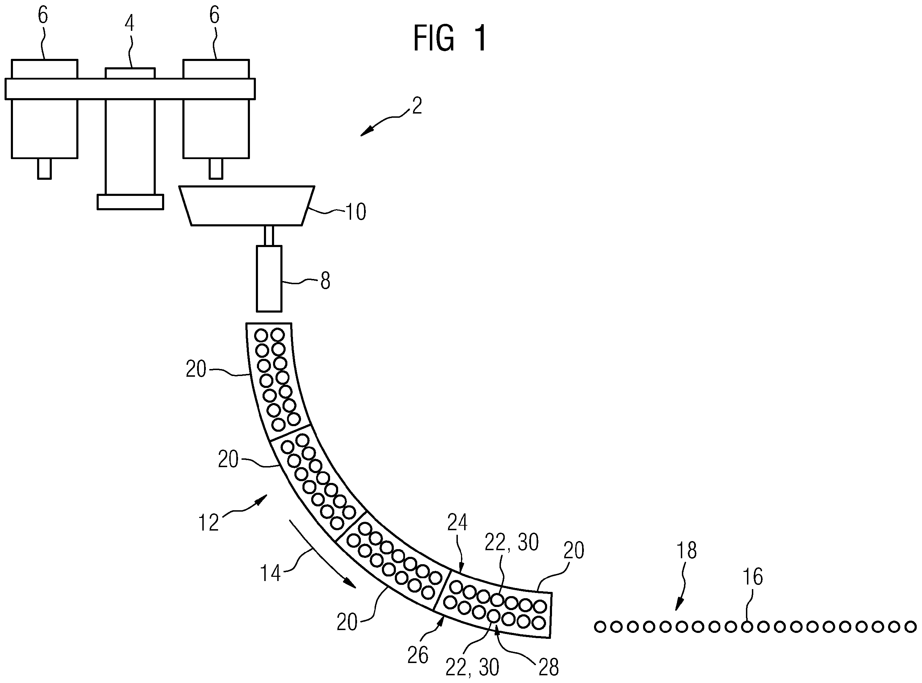

FIG 1 zeigt eine Stranggießanlage 2 zur Herstellung eines Metallstranges in einer schematischen Darstellung.

Die Stranggießanlage 2 umfasst einen Pfannendrehturm 4, in den zwei Gießpfannen 6 austauschbar eingesetzt sind sowie eine Kokille 8 mit einer (figürlich nicht dargestellten) Primärkühleinrichtung. Außerdem umfasst die Stranggießanlage 2 einen Verteiler 10 zum Aufnehmen einer Metallschmelze aus den Gießpfannen 6 sowie zum Weiterleiten der Metallschmelze zu der Kokille 8. Des Weiteren verfügt die Stranggießanlage 2 über eine bogenförmige Strangführung 12 (auch Gießbogen genannt) zum Führen und Kühlen des Metallstranges. In Gießrichtung 14 der Stranggießanlage 2 folgt auf die Strangführung 12 eine mehrere Förderrollen 16 aufweisende Fördervorrichtung 18 zum Transportieren des Metallstranges.

Die Strangführung 12 weist mehrere in Gießrichtung 14 hintereinander angeordnete Strangführungssegmente 20 auf, die jeweils mehrere Strangführungsrollen 22 umfassen. In FIG 1 weist die Strangführung 12 der Stranggießanlage 2 exemplarisch vier Strangführungssegmente 20 auf. Grundsätzlich kann die Strangführung 12 jedoch eine höhere oder niedrigere Anzahl von Strangführungssegmenten 20 aufweisen.

Jeweils zwei Strangführungsrollen 22, von denen eine an einer Innenbogenseite 24 der Strangführung 12 angeordnet ist und die andere an einer Außenbogenseite 26 der Strangführung 2 angeordnet ist, bilden ein Rollenpaar 28. Bei den in FIG 1 dargestellten Strangführungsrollen 22 handelt es sich um Treiberrollen 30. Zusätzlich zu den Treiberrollen 30 kann das jeweilige Strangführungssegment 20 (figürlich nicht dargestellte) Stützrollen aufweisen.

Des Weiteren ist die Strangführung 12 mit einer (figürlich nicht dargestellten) Sekundärkühleinrichtung zum Kühlen des Metallstranges ausgestattet.

Zusätzlich zu den dargestellten bzw. beschriebenen Elementen kann die Stranggießanlage 2 ein oder mehrere weitere (figürlich nicht dargestellte) Elemente, wie zum Beispiel eine Trennvorrichtung zum Trennen des Metallstranges in mehrere Einzelstücke, aufweisen.

Da die Funktionsweise einer solchen Stranggießanlage dem Fachmann grundsätzlich bekannt ist, wird auf die Funktionsweise der Stranggießanlage 2 aus FIG 1 nicht näher eingegangen.

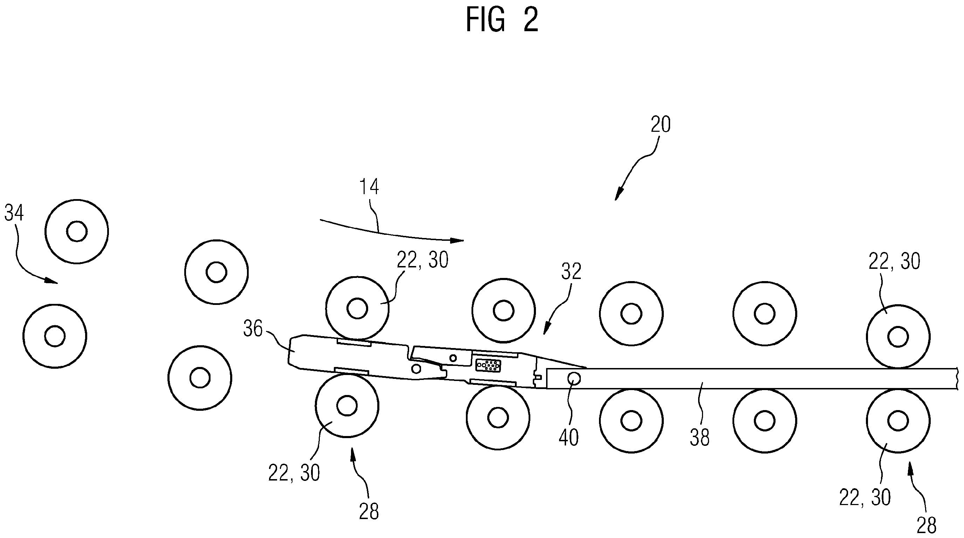

FIG 2 zeigt schematisch eins der Strangführungssegmente 20 der Stranggießanlage 2 aus FIG 1 sowie ein Überwachungssystem 32 zum Überwachen der Verschleißzustände der Strangführungsrollen 22.

Im vorliegenden Ausführungsbeispiel umfasst das dargestellte Strangführungssegment 20 sieben in Gießrichtung 14 der Stranggießanlage 2 hintereinander angeordnete Rollenpaare 28. Grundsätzlich kann das Strangführungssegment 20 eine höhere oder eine niedrigere Anzahl von Rollenpaaren 28 aufweisen. Wie auch in FIG 1 handelt es sich bei den in FIG 2 dargestellten Strangführungsrollen 22 des Strangführungssegments 20 um Treiberrollen 30. Die Rahmen, an denen die Treiberrollen 30 gelagert sind, sowie die Antriebsvorrichtungen, mit denen die Treiberrollen 30 angetrieben werden, sind in FIG 2 einer besseren Übersichtlichkeit halber nicht dargestellt.

In FIG 2 befindet sich das Überwachungssystem 32 in einem Rollenspalt 34 zwischen den innenbogenseitigen und den außenbogenseitigen Strangführungsrollen 22 des Strangführungssegments 20. Das Überwachungssystem 32 umfasst ein Überwachungsgerät 36 sowie eine Kaltstranggliederkette 38, die mithilfe eines Verbindungsbolzens 40 drehgelenkig mit dem Überwachungsgerät 36 verbunden ist. Die Kaltstranggliederkette 38 umfasst ihrerseits mehrere drehgelenkig miteinander verbundene Glieder.

Bei dem in FIG 2 dargestellten Zustand sind die beiden Strangführungsrollen 22 des dritten Rollenpaares 28 des Strangführungssegments 20 (gezählt in Gießrichtung 14) mit dem Überwachungsgerät 36 in Kontakt. In diesem Zustand werden mithilfe des Überwachungsgeräts 36 mehrere verschleißabhängige Zustandsparameter der beiden Strangführungsrollen 22 des dritten Rollenpaares 28 ermittelt.

Des Weiteren ist bei dem in FIG 2 dargestellten Zustand das letzte Rollenpaar 28 des Strangführungssegments 20 (gezählt in die Gießrichtung 14) geschlossen, wobei die beiden Strangführungsrollen 22 des letzten Rollenpaares 28 mit einer definierten Kraft gegen die Kaltstranggliederkette 38 gedrückt werden. Werden die Strangführungsrollen 22 des letzten Rollenpaares 28 angetrieben, so wird über diese Strangführungsrollen 22 die Kaltstranggliederkette 38 angetrieben, wodurch wiederum die Position des Überwachungsgeräts 36 verändert wird.

Wenn bei dem zuvor erwähnten dritten Rollenpaar 28 des Strangführungssegments 20 die Messungen zur Ermittlung der verschleißabhängigen Zustandsparameter der beiden Strangführungsrollen 22 des dritten Rollenpaares 28 abgeschlossen sind, wird die innenbogenseitige Strangführungsrolle 22 des dritten Rollenpaars 28 nach oben bewegt, d.h. vom Überwachungsgerät 36 wegbewegt. Dann wird die Kaltstranggliederkette 38 zusammen mit dem Überwachungsgerät 36 mithilfe des letzten Rollenpaares 28 zum nächsten Rollenpaar, d. h. zum vierten Rollenpaar des Strangführungssegments 20 (gezählt in Gießrichtung 14), gefahren. Dann wird die innenbogenseitige Strangführungsrolle 22 des vierten Rollenpaares an das Überwachungsgerät 36 heranbewegt, bis diese mit dem Überwachungsgerät 36 in Kontakt ist. In diesem Zustand werden mithilfe des Überwachungsgeräts 36 verschleißabhängige Zustandsparameter der beiden Strangführungsrollen 22 des vierten Rollenpaares ermittelt. Anschließend wird analog für die nächsten Rollenpaare des Strangführungssegments 20 vorgegangen.

Alternativ oder zusätzlich zu dem letzten Rollenpaar 28 des Strangführungssegments 20 kann ein anderes Rollenpaar desselben oder eines anderen Strangführungssegments 20 genutzt werden, um die Kaltstranggliederkette 38 und das Überwachungsgerät 36 anzutreiben. Welches Rollenpaar bzw. welche Rollenpaare der Strangführung 12 zum Antreiben des Kaltstranggliederkette 38 und das Überwachungsgerät 36 genutzt wird/werden, kann insbesondere davon abhängig sein, an welcher Position sich das Überwachungsgerät 36 befindet. Ein die Kaltstranggliederkette 38 und das Überwachungsgerät 36 antreibendes Rollenpaar der Strangführung 12 wird vorzugsweise mit einer definierten Kraft gegen die Kaltstranggliederkette 38 oder gegen das Überwachungsgerät 36 gedrückt, um über Reibungskräfte die Kaltstranggliederkette 38 und das Überwachungsgerät 36 antreiben zu können.

Ferner kann das Überwachungsgerät 36 dazu genutzt werden, den Rollenspalt 34 des Strangführungssegments 20 zu kalibrieren. Zur Kalibrierung des Rollenspalts 34 wird nacheinander bei allen Rollenpaaren 28 jeweils der Abstand zwischen der innenbogenseitigen und der außenbogenseitigen Strangführungsrolle 22 des jeweiligen Rollenpaares 28 kalibriert. Dabei wird die innenbogenseitige Strangführungsrolle 22 des jeweiligen Rollenpaares 28 an das Überwachungsgerät 36 heranbewegt und mit einer vorgegebenen Kraft gegen das Überwachungsgerät 36 gedrückt, wobei das Überwachungsgerät 36 als Abstandhalter mit einer vorgegebenen Dicke dient.

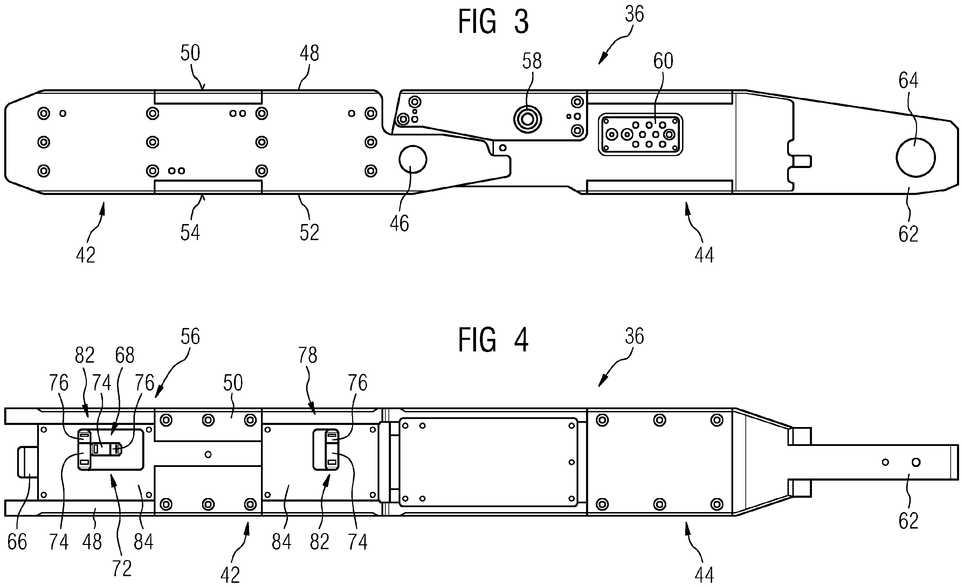

FIG 3 zeigt eine Seitenansicht des Überwachungsgeräts 36 aus FIG 2.

Wie aus FIG 3 ersichtlich ist, weist das Überwachungsgerät 36 ein erstes Glied 42 sowie ein damit verbundenes zweites Glied 44 auf. Die beiden Glieder 42, 44 des Überwachungsgeräts 36 sind mittels eines Verbindungsbolzens 46 drehgelenkig miteinander verbunden.

Das erste Glied 42 des Überwachungsgeräts 36 weist an seiner Oberseite 48 eine Kontaktfläche 50 zur Berührung durch eine innenbogenseitige Strangführungsrolle 22 und an seiner Unterseite 52 eine Kontaktfläche 54 zur Berührung durch eine außenbogenseitige Strangführungsrolle 22 auf.

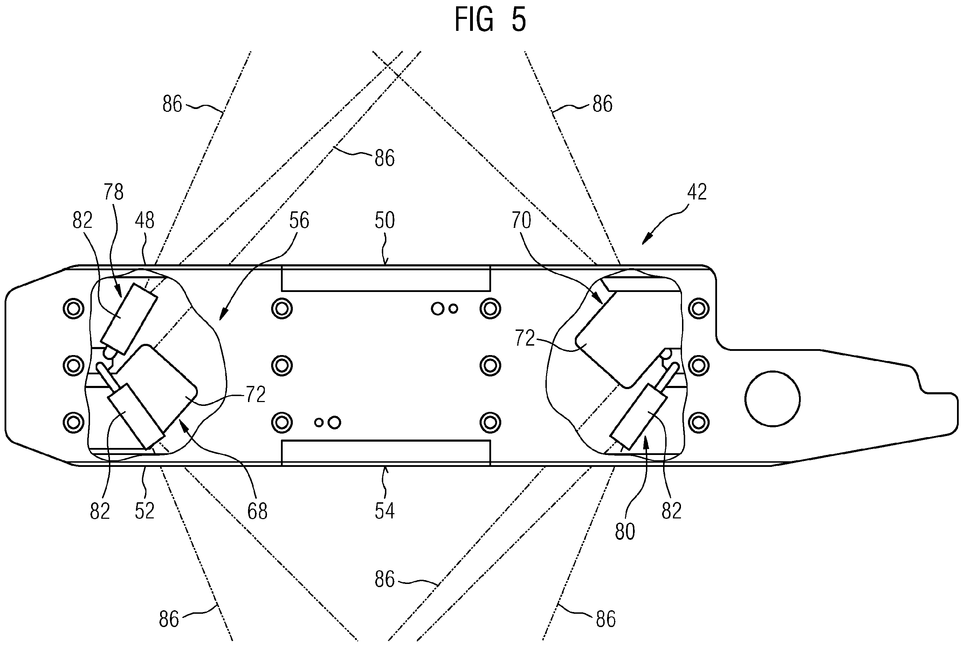

Darüber hinaus umfasst das erste Glied 42 des Überwachungsgeräts 36 eine Ermittlungseinheit 56 zur Ermittlung verschleißabhängiger Zustandsparameter zweier Strangführungsrollen 22 (vgl. FIG 4 und FIG 5).

Das zweite Glied 44 des Überwachungsgeräts 36 weist eine Antenne 58 zur drahtlosen Datenübertragung an eine externe Vorrichtung sowie ein Bedienfeld 60 zum Bedienen des Überwachungsgeräts 36 auf.

Außerdem weist das zweite Glied 44 des Überwachungsgeräts 36 ein Anschlusselement 62 auf, mittels welchem das Überwachungsgerät 36 mit der besagten Kaltstranggliederkette 38 verbindbar ist. Das Anschlusselement 62 umfasst eine Öffnung 64, durch welche der zuvor erwähnte Verbindungsbolzen 40 hindurchführbar ist.

FIG 4 zeigt eine Draufsicht des Überwachungsgeräts 36 aus FIG 2 und FIG 3.

Neben einigen der zuvor erwähnten Elemente des Überwachungsgeräts 36 ist in FIG 4 eine Kamera 66 des Überwachungsgeräts 36 sichtbar. Mithilfe der Kamera 66 kann, während das Überwachungsgerät 36 durch den Rollenspalt 34 transportiert wird, ein Video vom Strangführungssegment 20 aufgenommen werden. Ein solches Video kann Aufschluss über den Zustand der Strangführungsrollen 22 und/oder den Zustand anderer Elemente des Strangführungssegments 20, wie zum Beispiel von Kühleinrichtungen, Auflaufblechen usw., geben.

Darüber hinaus sind in FIG 4 einige Elemente der zuvor erwähnten Ermittlungseinheit 56 sichtbar. Die Ermittlungseinheit 56 umfasst eine erste Profil-Ermittlungsvorrichtung 68 zur Ermittlung eines Oberflächenprofils einer innenbogenseitigen Strangführungsrolle 22 sowie eine zweite Profil-Ermittlungsvorrichtung 70 zur Ermittlung eines Oberflächenprofils einer außenbogenseitigen Strangführungsrolle 22, wobei in FIG 4 die zweite Profil-Ermittlungsvorrichtung 70 (vgl. FIG 5) nicht sichtbar ist.

Jede der beiden Profil-Ermittlungsvorrichtungen 68, 70 umfasst eine Messvorrichtung 72, welche einen Projektor 74 sowie einen Detektor 76 aufweist, wobei der jeweilige Projektor 74 im vorliegenden Ausführungsbeispiel als Linienlaserprojektor ausgebildet ist und der jeweilige Detektor 76 als Flächenbildkamera ausgebildet ist.

Ferner umfasst die Ermittlungseinheit 56 eine erste Durchmesser-Ermittlungsvorrichtung 78 zur Ermittlung eines Rollendurchmessers einer innenbogenseitigen Strangführungsrolle 22 sowie eine zweite Durchmesser-Ermittlungsvorrichtung 80 zur Ermittlung eines Rollendurchmessers einer außenbogenseitigen Strangführungsrolle 22, wobei in FIG 4 die zweite Durchmesser-Ermittlungsvorrichtung 80 (vgl. FIG 5) nicht sichtbar ist.

Jede der beiden Durchmesser-Ermittlungsvorrichtungen 78, 80 umfasst zwei Messvorrichtungen 82, die jeweils einen Projektor 74 sowie einen Detektor 76 aufweisen, wobei auch bei diesen Messvorrichtungen 82 der jeweilige Projektor 74 als Linienlaserprojektor ausgebildet ist und der jeweilige Detektor 76 als Flächenbildkamera ausgebildet ist.

Die Messvorrichtungen 72, 82 der Ermittlungseinheit 56 sind jeweils hinter durchsichtigen Schutzabdeckungen 84, die sich an der Oberseite 48 des Überwachungsgeräts 36 und an der (in FIG 4 nicht sichtbaren) Unterseite 52 des Überwachungsgeräts 36 befinden, im Inneren des ersten Glieds 42 des Überwachungsgeräts 36 angeordnet. In bevorzugter Weise sind alle sechs Messvorrichtungen 72, 82 der Ermittlungseinheit 56 baugleich zueinander ausgebildet.

FIG 5 zeigt eine Seitenansicht des ersten Glieds 42 des Überwachungsgeräts 36, wobei das erste Glied 42 teilweise im Schnitt dargestellt ist.

In FIG 5 sind die Messvorrichtung 72 der ersten Profil-Ermittlungsvorrichtung 68 sowie die Messvorrichtung 72 der zweiten Profil-Ermittlungsvorrichtung 70 sichtbar. Darüber hinaus sind in FIG 5 die beiden Messvorrichtungen 82 der zweiten Durchmesser-Ermittlungsvorrichtung 80 sichtbar. Von der ersten Durchmesser-Ermittlungsvorrichtung 78 ist in FIG 5 jedoch nur einer ihrer beiden Messvorrichtungen 82 sichtbar, da die andere der beiden Messvorrichtungen 82 der ersten Durchmesser-Ermittlungsvorrichtung 78 durch die Messvorrichtung 72 der zweiten Profil-Ermittlungsvorrichtung 70 verdeckt ist.

Darüber hinaus sind in FIG 5 die Lichtfächer 86, die von den Messvorrichtungen 72, 82 der Ermittlungseinheit 56, genauer gesagt von deren Projektoren 74, zum Zwecke der Ermittlung verschleißabhängiger Zustandsparameter einer Strangführungsrolle 22 erzeugt werden, dargestellt.

Die von den Messvorrichtungen 82 der beiden Durchmesser-Ermittlungsvorrichtungen 78, 80 erzeugten Lichtfächer 86 sind parallel zur Zeichenebene der FIG 5, während die von den Messvorrichtungen 72 der beiden Profil-Ermittlungsvorrichtungen 68, 70 erzeugten Lichtfächer 86 senkrecht zur Zeichenebene der FIG 5 stehen. Treffen die Lichtfächer 86 auf eine Fläche, wie zum Beispiel eine Umfangsfläche einer Strangführungsrolle 22, erzeugen die Lichtfächer 86 auf der Fläche ein linienförmiges Lichtmuster.

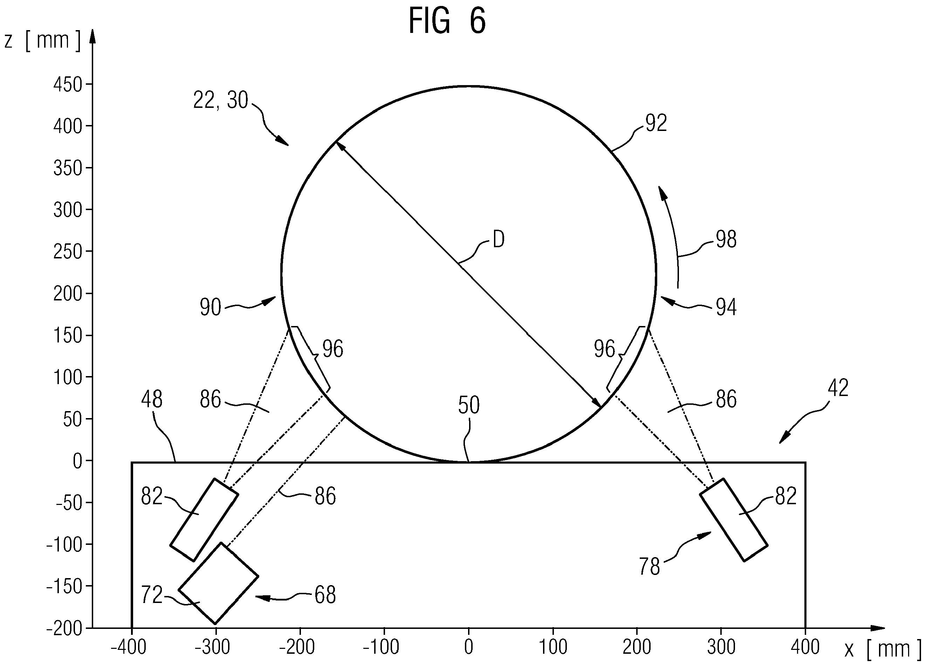

FIG 6 zeigt ein zweidimensionales kartesisches Koordinatensystem mit einer x-Achse und einer z-Achse. Darüber hinaus zeigt FIG 6 eine schematische Darstellung des ersten Glieds 42 des Überwachungsgeräts 36 sowie einer innenbogenseitigen Strangführungsrolle 22, bei der es sich um eine Treiberrolle 30 handelt, wobei die Strangführungsrolle 22 und das erste Glied 42 des Überwachungsgeräts 36 in einer Seitenansicht dargestellt sind. Die in FIG 6 erkennbaren Abmessungen der Strangführungsrolle 22 sowie des ersten Glieds 42 des Überwachungsgeräts 36 sind lediglich exemplarisch gewählt.

In FIG 6 sind einer besseren Übersichtlichkeit halber lediglich die erste Profil-Ermittlungsvorrichtung 68 sowie die erste Durchmesser-Ermittlungsvorrichtung 78 dargestellt, wohingegen die zweite Profil-Ermittlungsvorrichtung 70 und die zweite Durchmesser-Ermittlungsvorrichtung 80 in FIG 6 nicht dargestellt sind.

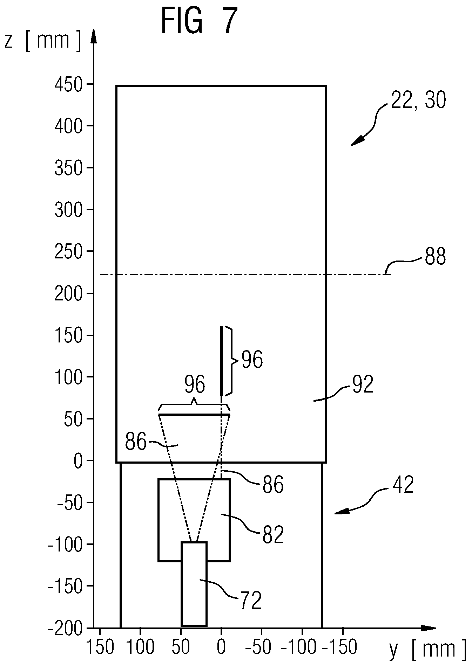

Anhand von FIG 6 wird nachfolgend erläutert, wie mithilfe der ersten Profil-Ermittlungsvorrichtung 68 und der ersten Durchmesser-Ermittlungsvorrichtung 78 zwei verschleißabhängige Zustandsparameter der innenbogenseitigen Strangführungsrolle 22, nämlich ein Oberflächenprofil der Strangführungsrolle 22 parallel zur Rollenachse 88 der Strangführungsrolle 22 (vgl. FIG 7) sowie deren Rollendurchmesser D, ermittelt werden.

Die nachfolgenden Ausführungen gelten in analoger Weise für die in FIG 6 nicht dargestellte zweite Profil-Ermittlungsvorrichtung 70 und die in FIG 6 nicht dargestellte zweite Durchmesser-Ermittlungsvorrichtung 80 im Hinblick auf die Ermittlung der gleichen verschleißabhängigen Zustandsparameter einer außenbogenseitigen Strangführungsrolle 22.

Wie aus FIG 6 ersichtlich ist, sind die beiden Messvorrichtungen 82 der ersten Durchmesser-Ermittlungsvorrichtung 78 so angeordnet, dass wenn - wie es in FIG 6 der Fall ist - die Strangführungsrolle 22 mit der Kontaktfläche 50 an der Oberseite 48 des ersten Glieds 42 in Kontakt ist, eine dieser beiden Messvorrichtungen 82 einer ersten Seite 90 der Umfangsfläche 92 der Strangführungsrolle 22 zugewandt ist, während die andere der beiden Messvorrichtungen 82 einer zweiten Seite 94 der Umfangsfläche 92 der Strangführungsrolle 22 zugewandt ist.

Zur Ermittlung des Rollendurchmessers D der Strangführungsrolle 22 wird von den beiden Messvorrichtungen 82 der ersten Durchmesser-Ermittlungsvorrichtung 78, genauer gesagt von deren Projektoren 74, jeweils ein Lichtfächer 86 erzeugt. Diese beiden Lichtfächer 86 erzeugen auf der Umfangsfläche 92 der Strangführungsrolle 22 jeweils ein linienförmiges Lichtmuster 96, welches sich in Umfangsrichtung 98 der Strangführungsrolle 22 erstreckt. Von den Detektoren 76 der beiden Messvorrichtungen 82 der ersten Durchmesser-Ermittlungsvorrichtung 78 werden diese beiden linienförmigen Lichtmuster 96 aufgenommen. Unter Verwendung des jeweiligen aufgenommenen Lichtmusters 96 werden mittels eines Lichtschnittverfahrens für eine Vielzahl von Punkten auf der Umfangsfläche 92 der Strangführungsrolle 22 (beispielsweise für jeweils 640 Punkte auf jeder der beiden Seiten 90, 94 der Umfangsfläche 92) deren Abstände zu der jeweils zugehörigen Messvorrichtung 82 ermittelt. Den ermittelten Abständen wird jeweils ein Punkt im Koordinatensystem zugeordnet. Anhand dieser Punkte wird mittels einer mathematischen Ausgleichsrechnung, insbesondere unter Verwendung der Methode der kleinsten Quadrate, der Rollendurchmesser D der Strangführungsrolle 22 ermittelt.

Zur Ermittlung des Oberflächenprofils der Strangführungsrolle 22 parallel zu deren Rollenachse 88 wird von der Messvorrichtung 72 der ersten Profil-Ermittlungsvorrichtung 68, genauer gesagt von deren Projektor 74, ein Lichtfächer 86 erzeugt. Dieser Lichtfächer 86 erzeugt auf der Umfangsfläche 92 der Strangführungsrolle 22 ein linienförmiges Lichtmuster 96 (vgl. FIG 7), welches sich parallel zur Rollenachse 88 der Strangführungsrolle 22 erstreckt. Vom Detektor 76 der Messvorrichtung 72 der ersten Profil-Ermittlungsvorrichtung 68 wird dieses Lichtmuster 96 aufgenommen. Unter Verwendung des aufgenommenen Lichtmusters 96 werden mittels eines Lichtschnittverfahrens für eine Vielzahl von Punkten auf der Umfangsfläche 92 der Strangführungsrolle 22 deren Abstände zu der Messvorrichtung 72 der ersten Profil-Ermittlungsvorrichtung 68 ermittelt. Anhand dieser Abstände wird das besagte Oberflächenprofil der Strangführungsrolle 22 ermittelt.

Die Auswertung der zuvor erwähnten Lichtmuster 96 erfolgt vorzugsweise von einer externen Auswerteeinheit, an welche die von den Messvorrichtungen 72, 82 erzeugten Messdaten mithilfe der zuvor erwähnten Antenne 58 des Überwachungsgeräts 36 übermittelt werden, nachdem das Überwachungsgerät 36 bzw. das Überwachungssystem 32 die Strangführung 12 durchlaufen hat.

FIG 7 zeigt ein zweidimensionales kartesisches Koordinatensystem mit einer y-Achse und einer z-Achse, wobei die z-Achse der in FIG 6 dargestellten z-Achse entspricht und die y-Achse senkrecht zur x-Achse aus FIG 6 steht. Außerdem zeigt FIG 7 eine schematische Darstellung des ersten Glieds 42 des Überwachungsgeräts 36 sowie der Strangführungsrolle 22 aus FIG 6, wobei das erste Glied 42 des Überwachungsgeräts 36 und die Strangführungsrolle 22 in einer Frontalansicht dargestellt sind.

In FIG 7 sind die beiden linienförmigen Lichtmuster 96 erkennbar, die von der Messvorrichtung 72 der ersten Profil-Ermittlungsvorrichtung 68 und einer der beiden Messvorrichtungen 82 der ersten Durchmesser-Ermittlungsvorrichtung 78 auf die Umfangsfläche 92 der Strangführungsrolle 22 projiziert werden.

Eine alternative Methode zur Ermittlung des Rollendurchmessers D der Strangführungsrolle 22 sieht vor, mithilfe eines Lichtschnittverfahrens die Innenwinkel eines Dreiecks, für welches die Strangführungsrolle 22 in der Seitenansicht einen sogenannten Inkreis darstellt, zu ermitteln. Anhand der Innenwinkel eines solchen Dreiecks kann mithilfe trigonometrischer Funktionen der Rollendurchmesser D der Strangführungsrolle 22 ermittelt werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung zu verlassen.

### Bezugszeichenliste

- 2: Stranggießanlage
- 4: Pfannendrehturm
- 6: Gießpfanne
- 8: Kokille
- 10: Verteiler
- 12: Strangführung
- 14: Gießrichtung
- 16: Förderrolle
- 18: Fördervorrichtung
- 20: Strangführungssegment
- 22: Strangführungsrolle
- 24: Innenbogenseite
- 26: Außenbogenseite
- 28: Rollenpaar
- 30: Treiberrolle
- 32: Überwachungssystem
- 34: Rollenspalt
- 36: Überwachungsgerät
- 38: Kaltstranggliederkette
- 40: Verbindungsbolzen
- 42: Glied
- 44: Glied
- 46: Verbindungsbolzen
- 48: Oberseite
- 50: Kontaktfläche
- 52: Unterseite
- 54: Kontaktfläche
- 56: Ermittlungseinheit
- 58: Antenne
- 60: Bedienfeld
- 62: Anschlusselement
- 64: Öffnung
- 66: Kamera
- 68: Profil-Ermittlungsvorrichtung
- 70: Profil-Ermittlungsvorrichtung
- 72: Messvorrichtung
- 74: Projektor
- 76: Detektor
- 78: Durchmesser-Ermittlungsvorrichtung
- 80: Durchmesser-Ermittlungsvorrichtung
- 82: Messvorrichtung
- 84: Schutzabdeckung
- 86: Lichtfächer
- 88: Rollenachse
- 90: Seite
- 92: Umfangsfläche
- 94: Seite
- 96: Lichtmuster
- 98: Umfangsrichtung
- D: Rollendurchmesser

## Patentansprüche

1. Überwachungsgerät (36) zum Überwachen eines Verschleißzustands einer Strangführungsrolle (22) einer Stranggießanlage (2), aufweisend eine Ermittlungseinheit (56) zum Ermitteln eines oder mehrerer verschleißabhängiger Zustandsparameter der Strangführungsrolle (22) sowie ein Anschlusselement (62), mittels welchem das Überwachungsgerät (36) drehgelenkig mit einer Kaltstranggliederkette (38) verbindbar ist.

2. Überwachungsgerät (36) nach Anspruch 1,
**dadurch gekennzeichnet, dass** die Ermittlungseinheit (56) eine Durchmesser-Ermittlungsvorrichtung (78, 80) zur Ermittlung eines Rollendurchmessers (D) der Strangführungsrolle (22) aufweist.

3. Überwachungsgerät (36) nach Anspruch 2,
**dadurch gekennzeichnet, dass** die Durchmesser-Ermittlungsvorrichtung (78, 80) eine Messvorrichtung (82) umfasst, die einen Projektor (74) zum Projizieren eines Lichtmusters (96), insbesondere einer Lichtlinie, auf eine Umfangsfläche (92) der Strangführungsrolle (22) sowie einen Detektor (76) zum Erfassen von an der Umfangsfläche (92) der Strangführungsrolle (22) reflektiertem Licht aufweist.

4. Überwachungsgerät (36) nach Anspruch 3,
**dadurch gekennzeichnet, dass** der Projektor (74) der Messvorrichtung (82) der Durchmesser-Ermittlungsvorrichtung (78, 80) ein Laserprojektor, insbesondere ein Linienlaserprojektor, ist und/oder der Detektor (76) der Messvorrichtung (82) eine Flächenbildkamera ist.

5. Überwachungsgerät (36) nach Anspruch 3 oder 4,
**dadurch gekennzeichnet, dass** die Durchmesser-Ermittlungsvorrichtung (78, 80) eine weitere solche Messvorrichtung (82) aufweist, wobei das Überwachungsgerät (36) eine Kontaktfläche (50, 54) zur Berührung durch die Strangführungsrolle (22) aufweist und die beiden Messvorrichtungen (82) so angeordnet sind, dass, wenn die Umfangsfläche (92) der Strangführungsrolle (22) mit der Kontaktfläche (50, 54) in Kontakt ist, die erstgenannte Messvorrichtung (82) einer ersten Seite (90) der Umfangsfläche (92) der Strangführungsrolle (22) zugewandt ist und die weitere Messvorrichtung (82) einer zweiten Seite (94) der Umfangsfläche (92) der Strangführungsrolle (22) zugewandt ist, welche von der ersten Seite (90) verschieden ist.

6. Überwachungsgerät (36) nach einem der voranstehenden Ansprüche,
**dadurch gekennzeichnet, dass** die Ermittlungseinheit (56) eine Profil-Ermittlungsvorrichtung (68, 70) zur Ermittlung eines Oberflächenprofils der Strangführungsrolle (22) aufweist.

7. Überwachungsgerät (36) nach einem der voranstehenden Ansprüche,
**gekennzeichnet durch** eine Kamera (66) zum Aufnehmen von Überwachungsbildern.

8. Überwachungsgerät (36) nach einem der voranstehenden Ansprüche,
**gekennzeichnet durch** eine Antenne (58), insbesondere eine WLAN-Antenne, zur drahtlosen Datenübertragung an eine externe Vorrichtung und/oder einen Port, insbesondere einen USB-Port, für ein externes Speichermedium.

9. Überwachungssystem (32), umfassend ein Überwachungsgerät (36) nach einem der Ansprüche 1 bis 8 sowie eine drehgelenkig mit dem Überwachungsgerät (36) verbundene Kaltstranggliederkette (38).

10. Verfahren zum Überwachen eines Verschleißzustands einer Strangführungsrolle (22) einer Stranggießanlage (2), bei dem ein Überwachungsgerät (36), insbesondere ein Überwachungsgerät (36) nach einem der Ansprüche 1 bis 8, in einen Rollenspalt (34) eines Strangführungssegments (20) der Stranggießanlage (2) eingebracht wird und mithilfe einer Ermittlungseinheit (56) des Überwachungsgeräts (36) ein oder mehrere verschleißabhängige Zustandsparameter der Strangführungsrolle (22) ermittelt werden.

11. Verfahren nach Anspruch 10,
**dadurch gekennzeichnet, dass** das Überwachungsgerät (36) drehgelenkig mit einer Kaltstranggliederkette (38) verbunden ist und das Überwachungsgerät (36) mithilfe der Kaltstranggliederkette (38) in den Rollenspalt (34) des Strangführungssegments (20) eingebracht wird.

12. Verfahren nach Anspruch 10 oder 11,
**dadurch gekennzeichnet, dass** als verschleißabhängiger Zustandsparameter der Strangführungsrolle (22) deren Rollendurchmesser (D) ermittelt wird.

13. Verfahren nach einem der Ansprüche 10 bis 12,
**dadurch gekennzeichnet, dass** als verschleißabhängiger Zustandsparameter der Strangführungsrolle (22) ein Oberflächenprofil der Strangführungsrolle (22), insbesondere ein Oberflächenprofil der Strangführungsrolle (22) parallel zu deren Rollenachse (88), ermittelt wird.

14. Verfahren nach einem der Ansprüche 10 bis 13,
**dadurch gekennzeichnet, dass** der jeweilige Zustandsparameter mittels eines Lichtschnittverfahrens, bei dem ein Lichtmuster (96), insbesondere eine Lichtlinie, auf eine Umfangsfläche (92) der Strangführungsrolle (22) projiziert wird, ermittelt wird.

15. Verwendung eines Überwachungsgeräts (36) nach einem der Ansprüche 1 bis 8 zur Kalibrierung eines Rollenspalts (34) eines Strangführungssegments (20) einer Stranggießanlage (2).
